# EUROPEAN PATENT APPLICATION

(11) **EP 4 446 037 A1**
(43) Date of publication of application: **16.10.2024**
(21) Application number: 24165430.0
(22) Date of filing: 22.03.2024
(51) Int. Cl.: B22F 10/28, B22F 10/85, B22F 12/90, B33Y 10/00, B33Y 30/00, B33Y 50/02, G01N 23/203, B23K 15/00

(54) **THREE-DIMENSIONAL POWDER BED FUSION ADDITIVE MANUFACTURING APPARATUS AND METHOD FOR CONTROLLING THREE-DIMENSIONAL POWDER BED FUSION ADDITIVE MANUFACTURING APPARATUS**

(30) Priority: 10.04.2023 JP 2023063588
(71) Applicant: Jeol Ltd., Akishima-shi, Tokyo 196-8558 (JP)
(72) Inventor: TSUTAGAWA, Nari, Tokyo, 196-8558 (JP); KITAMURA, Shinichi, Tokyo, 196-8558 (JP); OTSUKA, Takeshi, Tokyo, 196-8558 (JP); HISAKI, Taku, Tokyo, 196-8558 (JP)
(74) Representative: Boult Wade Tennant LLP

(57) **Abstract**

A three-dimensional PBF-AM apparatus (1) includes a build plate (22), a powder supply device (16), a beam irradiation device (2), a plurality of detection units (46), and a control unit (104). The control unit (104) has a plurality of arithmetic expressions. Then, the control unit (104) selects, according to the build step, a predetermined arithmetic expression from the plurality of arithmetic expressions, uses the selected arithmetic expression to perform arithmetic processing on a plurality of backscattered electron signals, and calculates an arithmetic signal.

## Description

### BACKGROUND

### Technical Field

The present invention relates to a three-dimensional powder bed fusion additive manufacturing (PBF-AM) apparatus and a method for controlling a three-dimensional PBF-AM apparatus.

### Related Art

These days, three-dimensional PBF-AM technology in which layers each obtained by thinly spreading a powder material are superimposed one by one to perform building is in the limelight, and many types of three-dimensional PBF-AM technology are developed based on varieties of materials of the powder material and build techniques.

As a build method of a conventional three-dimensional PBF-AM apparatus, for example, layers of a powder material are spread one by one on a base plate installed on the upper surface of a stage. Next, for the powder material spread over the base plate, only a two-dimensional structure portion corresponding to a cross section of a build object is melted by a heating mechanism using an electron beam or a laser. Then, such layers of powder material are stacked one by one in the height direction (Z direction), and thereby a build object is formed (see, for example, Patent Literature 1).

Further, Patent Literature 1 describes a technology in which a detection unit that detects backscattered electrons generated when an electron beam is applied to a powder material is provided and the state of a build object is determined based on information detected by the detection unit.

### Citation List

### Patent Literature

Patent Literature 1: JP 2021-42410 A

### SUMMARY

Determination factors at the time of the build step include a plurality of determination factors such as unevenness and contours of the build object. However, in the technology described in Patent Literature 1, it has been the case that a backscattered electron signal detected by the detection unit is subjected to arithmetic processing by using one arithmetic expression, and that accordingly only one kind of backscattered electron image is obtained. Thus, in the technology described in Patent Literature 1, determination processing using a backscattered electron signal has been limited. Further, there has been a problem that determination accuracy is reduced because determination processing is performed using an image for which image recognition is difficult.

In view of the above problems, an object of the present invention is to provide a three-dimensional PBF-AM apparatus and a method for controlling a three-dimensional PBF-AM apparatus that can improve determination accuracy at the time of a build step using a backscattered electron signal and can expand the use of the backscattered electron signal.

In order to solve the above problems and achieve the object of the present invention, a three-dimensional PBF-AM apparatus of the present invention includes: a build plate; a powder supply device that supplies a powder material to the build plate to form a powder layer; and a beam irradiation device that irradiates the powder layer with an electron beam. Further, the three-dimensional PBF-AM apparatus includes: a plurality of detection units that detect backscattered electrons generated when the electron beam is applied to the powder material; and a control unit that acquires a plurality of backscattered electron signals detected by a plurality of detection units, performs arithmetic processing on a plurality of backscattered electron signals, and calculates an arithmetic signal.

The control unit has a plurality of arithmetic expressions. Then, the control unit selects, according to the build step, a predetermined arithmetic expression from the plurality of arithmetic expressions, uses the selected arithmetic expression to perform arithmetic processing on a plurality of backscattered electron signals, and calculates an arithmetic signal.

A method for controlling a three-dimensional PBF-AM apparatus of the present invention is a control method used for a three-dimensional PBF-AM apparatus having the above-described configuration. The control unit selects, according to the build step, a predetermined arithmetic expression from a plurality of arithmetic expressions, uses the selected arithmetic expression to perform arithmetic processing on a plurality of backscattered electron signals, and calculates an arithmetic signal.

By using a three-dimensional PBF-AM apparatus and a method for controlling a three-dimensional PBF-AM apparatus of the present invention, determination accuracy at the time of a build step using a backscattered electron signal can be improved, and the use of the backscattered electron signal can be expanded.

### BRIEF DESCRIPTION OF DRAWINGS

FIG. 1 is a schematic cross-sectional view schematically showing a three-dimensional PBF-AM apparatus according to an embodiment of the present invention;
FIG. 2 is a block diagram showing a configuration example of a control system of the three-dimensional PBF-AM apparatus according to the embodiment of the present invention;
FIG. 3 is a plan view showing positions of detection units in a three-dimensional PBF-AM apparatus according to a first embodiment of the present invention;
FIG. 4 shows an example of a backscattered electron image acquired after powder-heating;
FIG. 5 is a backscattered electron image acquired after powder-heating, and shows an example in which a powder material is not appropriately spread;
FIG. 6 is a backscattered electron image acquired after melting, and shows an example in which a powder material is melted;
FIG. 7 is a plan view showing positions of detection units in a three-dimensional PBF-AM apparatus according to a second embodiment of the present invention; and
FIG. 8 is a plan view showing positions of detection units in a three-dimensional PBF-AM apparatus according to a third embodiment of the present invention.

### DETAILED DESCRIPTION

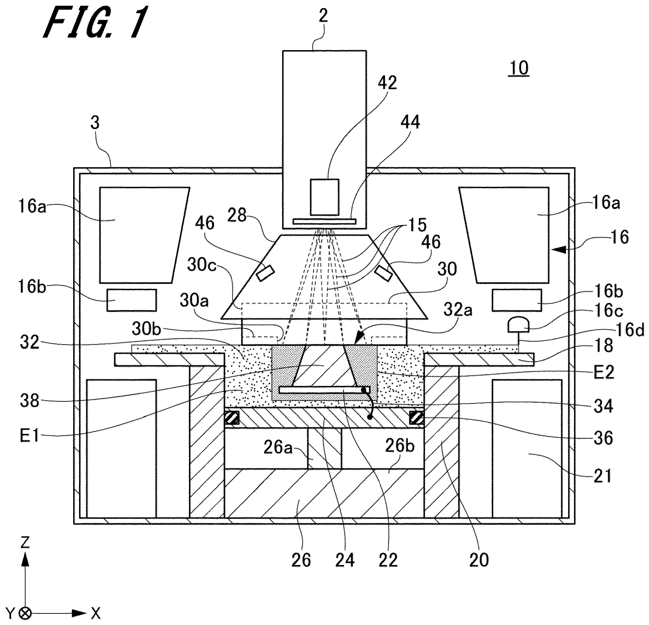

Hereinbelow, embodiments of a three-dimensional PBF-AM apparatus and a method for controlling a three-dimensional PBF-AM apparatus of the present invention are described with reference to FIGS. 1 to 8. In the drawings, common members are denoted by the same reference numerals.

### 1. First embodiment

### 1-1. Configuration of a three-dimensional PBF-AM apparatus

First, a first embodiment of a three-dimensional PBF-AM apparatus according to a first embodiment (hereinafter, referred to as the "present example") of the present invention is described with reference to FIG. 1.

FIG. 1 is a schematic cross-sectional view schematically showing a three-dimensional PBF-AM apparatus of the present example. In the following description, in order to clarify the shape, positional relationship, etc. of each part of the three-dimensional PBF-AM apparatus, the left-right direction of FIG. 1 is referred to as an X direction, the depth direction of FIG. 1 is referred to as a Y direction, and the up-down direction of FIG. 1 is referred to as a Z direction. The X direction, the Y direction, and the Z direction are directions orthogonal to each other. The X direction and the Y direction are directions parallel to the horizontal direction, and the Z direction is a direction parallel to the vertical direction.

A three-dimensional PBF-AM apparatus 1 shown in FIG. 1 is, for example, an apparatus that applies an electron beam to a powder material made of a metal powder of titanium, aluminum, iron, or the like to melt the powder material, stacks layers in each of which the powder material is solidified, and thus builds a three-dimensional object.

As shown in FIG. 1, the three-dimensional PBF-AM apparatus 1 includes a vacuum chamber 3, a beam irradiation device 2, a powder supply device 16, a build table 18, a build box 20, and a collection box 21. Further, the three-dimensional PBF-AM apparatus 1 includes a build plate 22, an inner base 24, a plate movement device 26, a radiation shielding cover 28, an electron shield 30, a camera 42, and a shutter 44. Further, the three-dimensional PBF-AM apparatus 1 includes a plurality of detection units 46 that detect backscattered electrons.

The vacuum chamber 3 is a chamber for creating a vacuum state by evacuating air in the chamber with a not-illustrated vacuum pump.

The beam irradiation device 2 is a device that applies an electron beam 15 to the build plate 22 or a build surface 32a of a powder layer formed of a powder material 32. The build surface 32a corresponds to the upper surface of the powder layer. The state of the powder layer changes as the process of three-dimensional PBF-AM proceeds. Although not illustrated, the beam irradiation device 2 includes an electron gun serving as a source of generation of the electron beam 15, a focusing lens that focuses the electron beam generated by the electron gun, and a deflecting lens that deflects the electron beam 15 focused by the focusing lens. The focusing lens is formed of a focusing coil, and focuses the electron beam 15 by a magnetic field generated by the focusing coil. The deflecting lens is formed of a deflecting coil, and deflects the electron beam 15 by a magnetic field generated by the deflecting coil.

The powder supply device 16 is a device that supplies, as an example of a powder material serving as a source material of a build object 38, a powder material 32 onto the build plate 22 to form a powder layer. The powder supply device 16 includes a hopper 16a, a powder dropper 16b, and a recoater 16c. The hopper 16a is a chamber for storing metal powder. The powder dropper 16b is a device that drops the powder material 32 stored in the hopper 16a onto the build table 18. The recoater 16c is a long-length member long in the Y direction, and includes a blade 16d for powder spreading. The recoater 16c spreads the powder material 32 dropped by the powder dropper 16b over the build table 18. The recoater 16c is provided to be movable in the X direction in order to spread the powder material 32 over the entire surface of the build table 18.

The build table 18 is horizontally placed inside the vacuum chamber 3. The build table 18 is placed below the powder supply device 16. A central portion of the build table 18 is opened. The opening shape of the build table 18 is a circular shape in a planar view or an angular shape in a planar view (for example, a quadrangular shape in a planar view).

The build box 20 is a box that forms a space for building. An upper end portion of the build box 20 is connected to the opening edge of the build table 18. A lower end portion of the build box 20 is connected to the bottom wall of the vacuum chamber 3.

The collection box 21 is a box that collects, out of the powder material 32 supplied onto the build table 18 by the powder supply device 16, the powder material 32 supplied more than necessary.

The build plate 22 is a plate for forming a build object 38 by using the powder material 32. The build object 38 is formed by stacking on the build plate 22. The build plate 22 is formed in a circular shape in a planar view or an angular shape in a planar view according to the opening shape of the build table 18. The build plate 22 is connected (grounded) to the inner base 24 by a ground wire 34 so as not to be in an electrically floating state. The inner base 24 is held at the GND (ground) potential. The powder material 32 is spread over the build plate 22 and the inner base 24.

The inner base 24 is provided to be movable in the up-down direction (Z direction). The build plate 22 moves in the up-down direction integrally with the inner base 24. The inner base 24 has a larger outer dimension than the build plate 22. The inner base 24 slides in the up-down direction along the inner surface of the build box 20. A sealing member 36 is attached to an outer peripheral portion of the inner base 24. The sealing member 36 is a member that maintains slidability and sealability between the outer peripheral portion of the inner base 24 and the inner surface of the build box 20. The sealing member 36 is formed of a material having heat resistance and elasticity.

The plate movement device 26 is a device that moves the build plate 22 and the inner base 24 in the up-down direction. The plate movement device 26 includes a shaft 26a and a drive mechanism unit 26b. The shaft 26a is connected to the lower surface of the inner base 24. The drive mechanism unit 26b includes a not-illustrated motor and a not-illustrated power transmission mechanism; and uses the motor as a drive source to drive the power transmission mechanism, and thereby moves the build plate 22 and the inner base 24 in the up-down direction integrally with the shaft 26a. The power transmission mechanism is formed of, for example, a rack and pinion mechanism, a ball screw mechanism, or the like.

The radiation shielding cover 28 is placed between the build plate 22 and the beam irradiation device 2 in the Z direction. The radiation shielding cover 28 is formed of a metal such as stainless steel. The radiation shielding cover 28 blocks radiant heat generated when the powder material 32 is irradiated with the electron beam 15 by the beam irradiation device 2. When the powder material 32 is irradiated with the electron beam 15 in order to primarily sinter the powder material 32, the powder material 32 is melted; if heat radiated at this time from the build surface 32a of the powder layer, that is, radiant heat is diffused over a large area in the vacuum chamber 3, thermal efficiency is deteriorated. In contrast, in the case where the radiation shielding cover 28 is placed above the build plate 22, heat radiated from the build surface 32a is blocked by the radiation shielding cover 28, and the blocked heat is reflected by the radiation shielding cover 28 and returned to the build plate 22 side. Thus, heat generated by irradiation with the electron beam 15 can be efficiently utilized.

Further, the radiation shielding cover 28 has a function of suppressing adhesion (vapor deposition) to the inner wall of the vacuum chamber 3 of vaporized substances generated when the powder material 32 is irradiated with the electron beam 15. When the powder material 32 is irradiated with the electron beam 15, part of the melted metal becomes an atomized vaporized substance, and rises from the build surface 32a. The radiation shielding cover 28 is placed to cover a space above the build surface 32a so that the vaporized substance does not diffuse in the vacuum chamber 3.

The electron shield 30 has an opening 30a and a mask portion 30b. When forming a build object 38, the electron shield 30 is placed to cover the upper surface of the powder material 32, that is, the build surface 32a. At this time, the opening 30a exposes the powder material 32 spread over the build plate 22, and the mask portion 30b shields the powder material 32 positioned outside the opening 30a. The shape of the opening 30a is set according to the shape of the build plate 22. For example, when the build plate 22 is in a circular shape in a planar view, the shape in a planar view of the opening 30a is set in a circular shape accordingly, and when the build plate 22 is in an angular shape in a planar view, the shape in a planar view of the opening 30a is set in an angular shape accordingly.

The electron shield 30 is placed below the radiation shielding cover 28. The opening 30a and the mask portion 30b of the electron shield 30 are placed between the build plate 22 and the radiation shielding cover 28 in the Z direction. The electron shield 30 has an enclosure portion 30c. The enclosure portion 30c is placed to surround a space above the opening 30a. Part (an upper portion) of the enclosure portion 30c overlaps the radiation shielding cover 28 in the Z direction. The enclosure portion 30c has a function of blocking radiant heat generated from the build surface 32a and a function of suppressing diffusion of vaporized substances generated from the build surface 32a. That is, the enclosure portion 30c has similar functions to the radiation shielding cover 28.

The electron shield 30 is formed of a metal having a higher melting point than the powder material 32 used as a source material of the build object 38. Further, the electron shield 30 is formed of a material having low reactivity with the powder material 32. Examples of the material of the electron shield 30 include titanium. The electron shield 30 may be formed of a metal of the same material as the powder material 32 used. The electron shield 30 is electrically grounded to the GND. When temporarily sintering the powder material 32 by irradiation with the electron beam 15 in a preheating step before a primary sintering step described later, the electron shield 30 exerts an electrical shielding function, and thereby suppresses the occurrence of powder scattering to a small scale.

The camera 42 is a camera capable of photographing the build surface 32a of the powder layer. The position of the camera 42 is placed to be shifted in the Y direction from the position of the beam irradiation device 2 so as not to interfere with the position of the beam irradiation device 2. The camera 42 is, for example, preferably formed of a visible light camera such as a digital video camera. The camera 42 photographs the build surface 32a of the powder layer to generate an image (image data) of the powder layer. Thus, the image generated by the camera 42 is an image indicating the state of the build surface 32a of the powder layer. Photographing by the camera 42 is performed in a state where illumination light emitted by an illumination light source (not illustrated) included in the three-dimensional PBF-AM apparatus 1 is applied to the build surface 32a of the powder layer.

The shutter 44 protects the camera 42 and an observation window so that vaporized substances generated from the build surface 32a when the powder material 32 is melted by irradiation with the electron beam 15 do not adhere to the camera 42 or the observation window. The photographing of the build surface 32a by the camera 42 is performed in a state where the shutter 44 is opened. In a step in which vaporized substances are likely to be generated or a step in which the amount of vaporized substances generated is large, that is, when melting the powder material 32 with the electron beam 15, the shutter 44 is closed.

The plurality of detection units 46 that detect backscattered electrons are placed below the beam irradiation device 2.

Specifically, the detection unit 46 is placed between the beam irradiation device 2 and the build surface 32a of the build object 38 formed on the build plate 22.

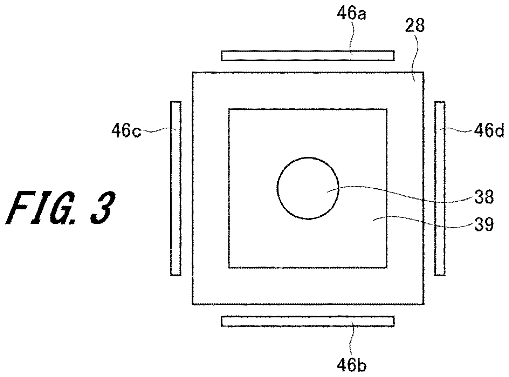

FIG. 3 is a plan view showing positions of detection units 46.

As shown in FIG. 3, a plurality of detection units 46a, 46b, 46c, and 46d are arranged to surround the peripheries of the build object 38 and the build plate 22. A first detection unit 46a is placed on one side in the X direction of the build object 38, and a second detection unit 46b is placed on the other side in the X direction of the build object 38. The first detection unit 46a and the second detection unit 46b face each other across the build object 38. A third detection unit 46c is placed on one side in the Y direction of the build object 38, and a fourth detection unit 46d is placed on the other side in the Y direction of the build object 38. The third detection unit 46c and the fourth detection unit 46d face each other across the build object 38.

The detection unit 46 is not limited to a semiconductor detector or the like, and may be a Ti electrode or the like having a small rate of secondary electron emission based on electronic excitation. Further, as the detection unit 46, backscattered electrons incident on an electrode may be detected as a current by a current detection amplifier, and an increase or decrease in current may be detected.

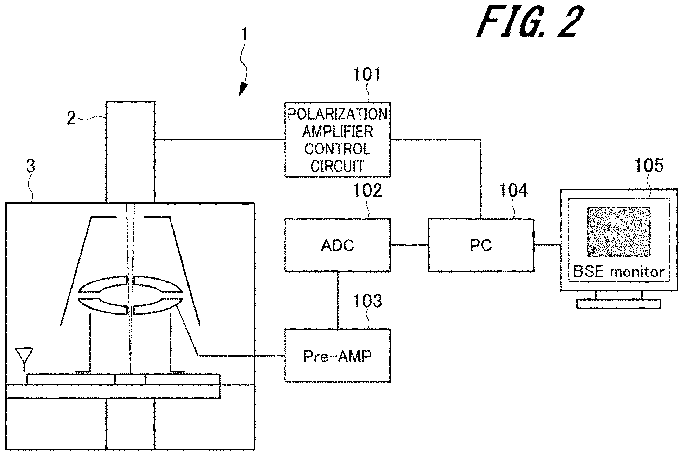

FIG. 2 is a block diagram showing a configuration example of a control system of the three-dimensional PBF-AM apparatus 1 of the present example.

As shown in FIG. 2, the three-dimensional PBF-AM apparatus 1 includes: a polarization amplifier control circuit 101 indicating an electron beam control unit; an analog-digital conversion circuit (ADC) 102; a preamplifier (Pre-AMP) 103; a personal computer (PC) 104 indicating an example of a control unit; and a display unit 105.

The polarization amplifier control circuit 101 is connected to the beam irradiation device 2 and the PC 104. The polarization amplifier control circuit 101 controls the beam irradiation device 2 on the basis of set beam scanning information. Thereby, the beam irradiation device 2 applies the electron beam 15 to a predetermined position. Further, the polarization amplifier control circuit 101 transmits, to the PC 104, beam irradiation position information indicating the position of irradiation with the electron beam 15.

The Pre-AMP 103 is connected to the detection unit 46 and the ADC 102. The Pre-AMP 103 converts a backscattered electron current detected by the detection unit 46 from a current signal to a voltage signal. The voltage signal converted by the Pre-AMP 103 is transmitted to the ADC 102. The ADC 102 converts the backscattered electron signal as a voltage signal from an analog signal to a digital signal, and transmits the digital signal to the PC 104.

The PC 104 includes a not-illustrated image processing unit and a not-illustrated storage unit. The image processing unit of the PC 104 captures an image generated by the camera 42, and performs predetermined image processing on the captured image. Then, the PC 104 outputs, to the display unit 105, the camera image subjected to image processing by the image processing unit.

The camera image generated by the image processing unit is stored in the storage unit. Further, the beam irradiation position information transmitted from the polarization amplifier control circuit 101 is stored in the storage unit. Further, a plurality of arithmetic expressions for performing arithmetic processing on backscattered electron signals acquired from the plurality of detection units 46a, 46b, 46c, and 46d are stored in the storage unit.

The PC 104 selects, according to the build step, a predetermined arithmetic expression from a plurality of arithmetic expressions. Then, the PC 104 uses the selected arithmetic expression to perform arithmetic processing on the backscattered electron signal, and calculates an arithmetic signal. Then, the image processing unit converts the arithmetic signal into an image, and acquires a backscattered electron image (BSE image). The PC 104 outputs the acquired backscattered electron image (BSE image) to the display unit 105. Further, the backscattered electron image (BSE image) is stored in the storage unit.

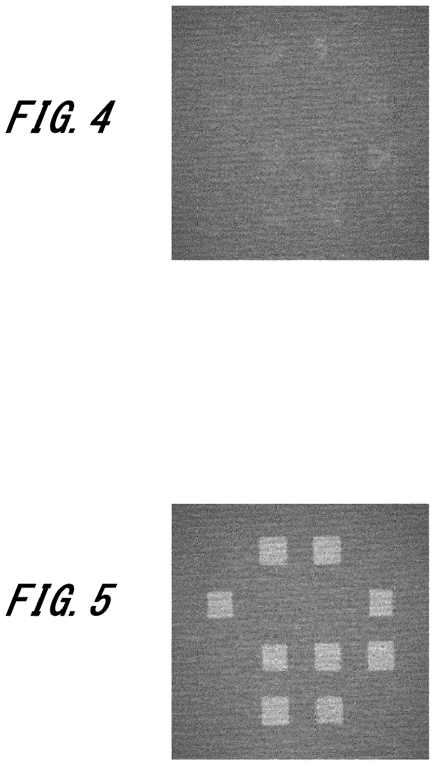

The display unit 105 is formed of, for example, a display such as a liquid crystal display device (LCD) or an organic ELD (electro-luminescence display). The display unit 105 displays the BSE image and the camera image outputted from the PC 104 on a display screen 106 (see FIG. 4, etc.).

### 1-2. Operation example of the three-dimensional PBF-AM apparatus

Next, an operation example of the three-dimensional PBF-AM apparatus 1 having the above-described configuration is described with reference to FIGS. 4 to 7.

First, the beam irradiation device 2 operates on the basis of a control command given from the PC 104, and thereby heats the build plate 22. The beam irradiation device 2 irradiates the build plate 22 with the electron beam 15 through the opening 30a of the electron shield 30, and scans the electron beam 15 over the build plate 22. Thereby, the build plate 22 is heated to such a temperature that the powder material 32 is temporarily sintered.

Next, the powder material 32 is spread over the build plate 22. The plate movement device 26 operates on the basis of a control command given from the PC 104, and thereby lowers the build plate 22 by a predetermined amount. The plate movement device 26 lowers the inner base 24 by a predetermined amount so that the upper surface of the build plate 22 is slightly lower than the upper surface of the powder material 32 spread over the build table 18. At this time, the build plate 22 lowers by a predetermined amount together with the inner base 24.

Then, the powder supply device 16 uses the powder dropper 16b to drop, onto the build table 18, the powder material 32 supplied from the hopper 16a to the powder dropper 16b, and then moves the recoater 16c from one end side to the other end side in the X direction to spread the powder material 32 over the inner base 24. At this time, the powder material 32 is spread over the build table 18 with a thickness corresponding to ΔZ. The excess powder material 32 is collected in the collection box 21.

Next, the beam irradiation device 2 operates on the basis of a control command given from the polarization amplifier control circuit 101 and the PC 104, and thereby performs what is called powder-heating (P.H.), which is preheating of the powder layer on the build plate 22. The powder layer is preheated in order to temporarily sinter the powder material 32. When the powder material 32 is temporarily sintered, the powder material 32 can be provided with conductivity. Thus, powder scattering in a primary sintering step performed after the preheating step can be suppressed.

The beam irradiation device 2 irradiates the powder material 32 on the build plate 22 with the electron beam 15. The beam irradiation device 2 scans the electron beam 15 over an area larger than a region (hereinafter, also referred to as a "build region") for forming a build object 38. Thereby, both the powder material 32 present in the build region and the powder material 32 present around the build region are temporarily sintered.

Next, a backscattered electron image (BSE image) is acquired. First, the beam irradiation device 2 operates on the basis of a control command given from the polarization amplifier control circuit 101 and the PC 104, and thereby scans the electron beam 15 over a temporarily sintered region where the temporarily sintered powder material 32 is present. At this time, the beam irradiation device 2 sets the electron beam current of the electron beam 15 as small as possible, and performs irradiation while placing the focus on the build surface 32a. Then, the detection unit 46 detects backscattered electrons generated by the electron beam 15.

Further, the detection unit 46 outputs the detected backscattered electron signal to the PC 104 via the Pre-AMP 103 and the ADC 102. Here, the PC 104 selects, from a plurality of arithmetic expressions, an arithmetic expression that can emphasize the contour of the build object 38. Then, the PC 104 uses the selected arithmetic expression to perform arithmetic processing on the backscattered electron signal, and calculates an arithmetic signal. Then, the image processing unit converts the arithmetic signal into an image, and acquires a backscattered electron image (BSE image).

FIG. 4 shows an example of a backscattered electron image acquired after powder-heating.

The image processing unit performs arithmetic processing on backscattered electron signals acquired from a plurality of detection units 46a, 46b, 46c, and 46d to generate a backscattered electron image. Here, in the backscattered electron image acquired after powder-heating, the image processing unit performs addition of a first backscattered electron signal A of the first detection unit 46a and a second backscattered electron signal B of the second detection unit 46b, the first detection unit 46a and the second detection unit 46b being arranged to face each other. That is, the arithmetic expression is A + B. It is also possible to perform addition of a third backscattered electron signal C of the third detection unit 46c and a fourth backscattered electron signal D of the fourth detection unit 46d (C + D), the third detection unit 46c and the fourth detection unit 46d being arranged to face each other. By such an arithmetic expression, a backscattered electron image in which the contour of the build object 38 is emphasized can be acquired. Thereby, whether the powder material 32 is appropriately spread or not can be easily checked, and the processing of determining the condition of spreading of the powder material 32 by the PC 104 can be accurately performed. In FIG. 4, the powder is appropriately spread, and thus an image in which the entire area is basically uniformly black is obtained.

Next, using the acquired BSE image, the PC 104 determines whether the powder material 32 is appropriately spread or not. In the case where the PC 104 determines that the powder material 32 is not appropriately spread, the work of spreading the powder material 32, etc. are performed again.

Next, the beam irradiation device 2 operates on the basis of a control command given from the PC 104 and the polarization amplifier control circuit 101, and thereby primarily sinters (melts) the powder material 32 by melting and solidification. By the above process in which the temporarily sintered powder material 32 is melted and solidified by irradiation with the electron beam 15, the powder material 32 as a temporarily sintered body is primarily sintered.

The beam irradiation device 2 specifies a build region on the basis of two-dimensional data obtained by a process in which three-dimensional CAD data of a target build object 38 is sliced to a certain thickness (a thickness corresponding to ΔZ), and scans the electron beam 15 over the build region to selectively melt the powder material 32 on the build plate 22. The powder material 32 melted by irradiation with the electron beam 15 solidifies after the electron beam 15 passes. Thereby, a build object of the first layer is formed.

Next, a backscattered electron image (BSE image) after melting, that is, a post-melting BSE image is acquired.

First, the beam irradiation device 2 operates on the basis of a control command given from the polarization amplifier control circuit 101 and the PC 104, and thereby scans the electron beam 15 over a temporarily sintered region where the temporarily sintered powder material 32 is present. At this time, the beam irradiation device 2 sets the electron beam current of the electron beam 15 as small as possible, and performs irradiation while placing the focus on the build surface 32a. Then, the detection unit 46 detects backscattered electrons generated by the electron beam 15.

Further, the detection unit 46 outputs the detected backscattered electron signal to the PC 104 via the Pre-AMP 103 and the ADC 102. Thus, the PC 104 selects, from a plurality of arithmetic expressions, an arithmetic expression that can emphasize the unevenness of the build object 38. Then, the PC 104 uses the selected arithmetic expression to perform arithmetic processing on the backscattered electron signal, and calculates an arithmetic signal. Then, the image processing unit converts the arithmetic signal into an image, and acquires a backscattered electron image (BSE image).

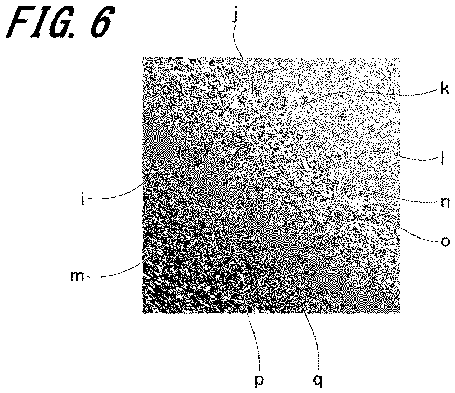

FIG. 6 shows an example of a backscattered electron image acquired after melting.

In the backscattered electron image acquired after melting, the image processing unit performs subtraction of a first backscattered electron signal A and a second backscattered electron signal B. Alternatively, the image processing unit performs subtraction of a third backscattered electron signal C and a fourth backscattered electron signal D. Thereby, a backscattered electron image in which the unevenness of the build surface 32a of the build object 38 is emphasized can be acquired.

As the arithmetic expression, also (A - B)/(A + B) or (C - D)/(C + D) may be used. That is, by dividing a subtraction signal of two backscattered electron images by an addition signal of two backscattered electron images, the fluctuation of the electron beam current and the influence of noise can be suppressed. Thereby, as shown in FIG. 6, a backscattered electron image in which the unevenness of the build surface 32a of the build object 38 is emphasized can be acquired. As a result, whether the powder material 32 is appropriately melted or not can be checked more easily, and the processing of determining the degree of melting of the powder material 32 by the PC 104 can be accurately performed.

Next, the PC 104 performs determination on the BSE image after melting, and determines whether the powder material 32 is appropriately melted or not. In the case where the PC 104 determines that the powder material 32 is not appropriately melted, the work of melting the powder material 32, etc. are performed again.

Next, as preparation for spreading the powder material 32, after-heating (A.H.) of heating the build surface 32a is performed. The beam irradiation device 2 operates under the control of the polarization amplifier control circuit 101 and the PC 104, and thereby irradiate the build surface 32a with the electron beam 15 through the opening 30a of the electron shield 30. At this time, the polarization amplifier control circuit 101 defocuses the electron beam 15 by means of an objective lens or the like included in the beam irradiation device 2. This defocusing brings about a state where the in-focus position of the electron beam 15 is shifted downward from the build surface 32a, that is, an underfocus state.

The polarization amplifier control circuit 101 and the PC 104 control the beam irradiation device 2 to scan the electron beam 15 as large as the opening 30a of the electron shield 30. Thereby, the entire region of the build surface 32a exposed to the opening 30a is irradiated with the electron beam 15.

The build surface 32a is heated to such a temperature that the powder material 32 is temporarily sintered. When the build surface 32a is heated to a predetermined temperature, the beam irradiation device 2 stops the irradiation with the electron beam 15.

Next, the build plate 22 is lowered by a predetermined amount (ΔZ). The plate movement device 26 lowers the inner base 24 by ΔZ so that the build surface 32a is slightly lower than the upper surface of the powder material 32 spread over the build table 18.

After that, the above-described steps are repeated until building is completed up to the final layer, that is, the building of the build object 38 is completed. The building of the build object 38 is completed at the stage when the necessary number of layers of the powder material 32 to build the build object 38 are melted and solidified. Thereby, the target build object 38 is obtained.

Thus, the PC 104 selects, according to the build step, an arithmetic expression when acquiring a BSE image. Thereby, determination work using a BSE image can be performed using appropriate information. As a result, determination work can be easily performed, and determination accuracy can be improved. Further, by preparing a plurality of arithmetic expressions in advance, a plurality of kinds of images can be acquired from a backscattered electron signal; therefore, a backscattered electron signal can be used for a plurality of kinds of determination processing, and the use of the backscattered electron signal can be expanded.

The arithmetic expression is not limited to the examples described above. For example, the BSE image used when determining the condition of spreading of the powder material 32 may be calculated by A + B + C + D as an arithmetic expression using a first backscattered electron signal A, a second backscattered electron signal B, a third backscattered electron signal C, and a fourth backscattered electron signal D. Thereby, a backscattered electron image in which the contour of the build object 38 is more emphasized can be acquired. As a result, whether the powder material 32 is appropriately spread or not can be easily checked, and the processing of determining the condition of spreading of the powder material 32 by the PC 104 can be performed more accurately.

Further, the BSE image used when determining the degree of melting of the powder material 32 may be calculated by an arithmetic expression obtained by combining (A - B)/(A + B) and (C - D)/(C + D). A backscattered electron image in which the unevenness of the build surface 32a of the build object 38 is more emphasized can be acquired. As a result, whether the powder material 32 is appropriately melted or not can be checked more easily, and the processing of determining the degree of melting of the powder material 32 by the PC 104 can be accurately performed.

Further, as an arithmetic expression for acquiring a BSE image used when determining the degree of melting of the powder material 32, for example, arithmetic expressions like below may be used. First, a BSE image is acquired using (A - B)/(A + B) or (C - D)/(C + D) as an arithmetic expression. Then, a BSE image is acquired using A + B or C + D as an arithmetic expression. Then, the two BSE images acquired by two arithmetic expressions are simultaneously displayed on the display screen 106. Thereby, not only the degree of melting of the build object 38 but also the shape and dimensions of the build object 38 can be simultaneously observed. That is, the number of arithmetic expressions selected by the PC 104 is not limited to one; depending on the contents of the build step, one or more arithmetic expressions may be selected from a plurality of arithmetic expressions, and a plurality of arithmetic signals may be acquired using the selected arithmetic expressions.

### 1-3. Example of determination of the condition of spreading of the powder material

Next, an example of determination of the condition of spreading of the powder material 32 is described with reference to FIGS. 4 and 5.

FIG. 5 is a backscattered electron image acquired after powder-heating, and shows an example in which the powder material 32 is not appropriately spread. The backscattered electron image shown in FIG. 5 is a backscattered electron image acquired by the arithmetic expression A + B.

When the powder material is appropriately spread, the backscattered electron image is an image in which almost the entire screen is black (see FIG. 4). When the powder material is not spread at all, as shown in FIG. 5, an image in which all the portions melted in the preceding layer are white and the other area is black is obtained. When spreading is performed partially, an image in which some of the portions melted in the preceding layer (portions where the powder material is spread) are black, the others of the melted portions (portions where the powder material 32 is not spread) are white, and all the other portions of the powder material 32 are black is obtained.

Here, xyz three-dimensional coordinates are envisaged. Data of a BSE image after melting of the preceding layer and a BSE image before melting of the current layer is converted into numbers in the form of (x, y, z) in all the number of pixels, and is converted into xyz three-dimensional data. That is, the position as the x coordinate of the BSE image, the position as the Y coordinate of the BSE image, and the brightness/darkness value of the BSE image corresponding to the X coordinate and the Y coordinate are set. At this time, it is assumed that the whiter the image is, the larger the brightness/darkness value is, and the blacker the image is, the smaller the brightness/darkness value is.

Then, the difference between the values of the z coordinate corresponding to the same xy coordinates of the two pieces of three-dimensional data (the brightness/darkness values of the BSE images corresponding to the X coordinate and the Y coordinate) is taken, and thus three-dimensional data is derived. In the three-dimensional data obtained by taking the difference between the BSE image after melting of the preceding layer and the BSE image before melting of the current layer, the values of the z coordinate (brightness/darkness values) of the two pieces of three-dimensional data are almost the same in any xy coordinates if the powder material is not spread. Therefore, the value of the z coordinate is expected to take a value close to 0 in any xy coordinates.

On the other hand, when the powder material 32 is appropriately spread, the portion of the build object that was white in the preceding layer becomes black; therefore, in the three-dimensional data obtained by taking the difference, the value of the z coordinate in the xy coordinates indicating the position of the build object is a brightness/darkness value indicating the difference between white and black (a value surely larger than 0). Thus, attention is paid to two values. The first value is the z coordinate of three-dimensional data obtained by taking data of differences (difference values in brightness and darkness between two BSE images). Then, a threshold is set for this value. The second value is a value (hereinafter, referred to as a powder spreading ratio) obtained by a process in which the total value of the number of pixels exceeding the threshold of the z coordinate (the difference value in brightness and darkness between two BSE images) of three-dimensional data obtained by taking data of differences is divided by the total value of the number of pixels of portions where the BSE image becomes white due to the presence of the build object of the preceding layer. The design is made such that a threshold can be set also for the powder spreading ratio; when the value of the powder spreading ratio is smaller than this threshold, it is determined that the powder is not appropriately spread. Thereby, the degree of spreading of the powder material 32 can be easily determined.

### 1-4. Example of determination of the degree of melting of the powder material

Next, an example of determination of the degree of melting of the powder material 32 is described with reference to FIG. 6.

FIG. 6 is a backscattered electron image acquired after melting. FIG. 6 shows an example in which both portion (i) where the powder material is relatively appropriately melted and portions (j) to (q) where the powder material is not appropriately melted are included. The backscattered electron image shown in FIG. 6 is a backscattered electron image acquired by the arithmetic expression (A - B)/(A + B).

When the powder material 32 is appropriately melted, the outermost surface of the build surface 32a is flat as shown in portion (i) of FIG. 6. As shown in portions (j) to (q) of FIG. 6, when melting is not appropriately performed, the outermost surface of the build surface 32a has severe unevenness. Here, the unevenness of the outermost surface can be regarded as a three-dimensional wave. Thus, the maximum amplitude and the maximum period of the three-dimensional wave are obtained. The unevenness of the outermost surface can be converted into numbers in the form of xyz three-dimensional coordinates (x, y, z) in all the number of pixels, and can be converted into xyz three-dimensional data. That is, the brightness/darkness value of the BSE image corresponding to the X coordinate and the Y coordinate, i.e., the position as the X coordinate of the BSE image and the position as the Y coordinate of the BSE image is set.

Then, the maximum amplitude and the maximum period are obtained from the three-dimensional data. Thresholds are set for the amplitude and the period; when both or one of the thresholds is exceeded, it is determined that the powder material 32 is not appropriately melted. Thereby, the degree of melting of the powder material 32 can be determined.

### 2. Second embodiment

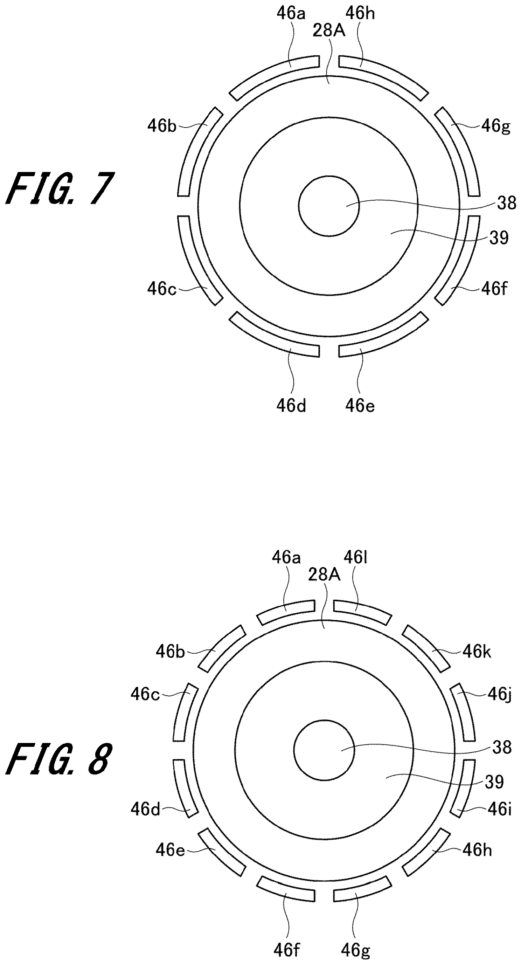

Next, a three-dimensional PBF-AM apparatus according to a second embodiment is described with reference to FIG. 7.

FIG. 7 is a plan view showing positions of detection units in a three-dimensional PBF-AM apparatus according to the second embodiment.

A difference of the three-dimensional PBF-AM apparatus according to the second embodiment from the three-dimensional PBF-AM apparatus according to the first embodiment is in the number of detection units. Thus, herein, portions common to those of the three-dimensional PBF-AM apparatus according to the first embodiment are denoted by the same reference numerals, and a repeated description is omitted.

As shown in FIG. 7, eight detection units 46a, 46b, 46c, 46d, 46e, 46f, 46g, and 46h are included. The eight detection units 46a, 46b, 46c, 46d, 46e, 46f, 46g, and 46h are arranged at equal angular intervals to surround the periphery of the build object 38. That is, the three-dimensional PBF-AM apparatus according to the second embodiment includes eight divided electrodes.

The image processing unit acquires a BSE image by using backscattered electron signals A, B, C, D, E, F, G, and H from the eight detection units 46a, 46b, 46c, 46d, 46e, 46f, 46g, and 46h. As an arithmetic expression for acquiring a BSE image, for example, various arithmetic expressions such as A + B + C + D + E + F + G + H and others can be used.

By configuring the detection units 46a, 46b, 46c, 46d, 46e, 46f, 46g, and 46h as eight divided electrodes, inclination information of the build surface 32a can be acquired from directions at 45° intervals, from A-E to D-H. Thus, the surface shape of the build surface 32a can be analyzed more finely, and high-accuracy unevenness information can be obtained.

Other configurations are similar to those of the three-dimensional PBF-AM apparatus 1 according to the first embodiment, and thus a description thereof is omitted. Similar operation and effect to the three-dimensional PBF-AM apparatus according to the first embodiment described above can be obtained also by the three-dimensional PBF-AM apparatus according to the second embodiment.

### 3. Third embodiment

Next, a three-dimensional PBF-AM apparatus according to a third embodiment is described with reference to FIG. 8.

FIG. 8 is a plan view showing positions of detection units in a three-dimensional PBF-AM apparatus according to the third embodiment.

A difference of the three-dimensional PBF-AM apparatus according to the third embodiment from the three-dimensional PBF-AM apparatus according to the first embodiment is in the number of detection units. Thus, herein, portions common to those of the three-dimensional PBF-AM apparatus according to the first embodiment are denoted by the same reference numerals, and a repeated description is omitted.

As shown in FIG. 8, twelve detection units 46a, 46b, 46c, 46d, 46e, 46f, 46g, 46h, 46i, 46j, 46k, and 461 are included. The twelve detection units 46a, 46b, 46c, 46d, 46e, 46f, 46g, 46h, 46i, 46j, 46k, and 461 are arranged at equal angular intervals to surround the periphery of the build object 38. That is, the three-dimensional PBF-AM apparatus according to the third embodiment includes twelve divided electrodes.

For a build surface 32a from which the direction of emission of backscattered electrons is three-fold symmetric (a hexagonal crystal or the like) or four-fold symmetric (a cubic crystal or the like) due to the influence of the crystal orientation or the like, a BSE image is acquired using electrode signals (A + E + I, B + F + J, C + G + K, D + H + L) in three-fold symmetric directions in backscattered electron detection after melting. Further, a BSE image is acquired using electrode signals (A + D + G + J, B + E + H + K, C + F + I + L) in four-fold symmetric directions. Then, the BSE image formed of electrode signals in three-fold symmetric directions and the BSE image formed of electrode signals in four-fold symmetric directions are compared; thereby, crystal orientation information of the build surface 32a can be obtained.

Other configurations are similar to those of the three-dimensional PBF-AM apparatus 1 according to the first embodiment, and thus a description thereof is omitted. Similar operation and effect to the three-dimensional PBF-AM apparatus according to the first embodiment described above can be obtained also by the three-dimensional PBF-AM apparatus according to the third embodiment.

Although examples in which the build plate 22 is formed in a circular shape are described in the three-dimensional PBF-AM apparatus according to the second embodiment and the three-dimensional PBF-AM apparatus according to the third embodiment, the present invention is not limited thereto, and the build plate may be formed in a quadrangular shape like in the first embodiment. Further, like in the first embodiment, four detection units 46 may be provided on the circular build plate 22 shown in each of the three-dimensional PBF-AM apparatus according to the second embodiment and the three-dimensional PBF-AM apparatus according to the third embodiment, and may be arranged on both sides in the X direction and the Y direction.

The present invention is not limited to the embodiments described above and shown in the drawings, and can be variously modified and implemented without departing from the gist of the invention described in the claims.

Further, although in the above-described embodiments backscattered electron signals are calculated by the image processing unit and then each arithmetic signal is converted into an image, the present invention is not limited thereto. For example, an arithmetic expression according to the step is selected from a plurality of arithmetic expressions, and calculation is performed using backscattered electron signals to derive an arithmetic signal.

Then, without converting the arithmetic signal into an image, whether the powder material is appropriately spread or not or whether the powder material is appropriately melted or not may be determined in the state of information of the arithmetic signal.

Further, the arithmetic expression is not limited to the above-described examples, and various other arithmetic expressions are used, for example. A plurality of acquired backscattered electron signals are subjected to discrete Fourier transformation to be decomposed into a plurality of wave number signals. Then, according to the build step, a BSE image may be generated from the decomposed wave number signals.

Further, as the detection unit, a detection unit in which a plurality of detection surfaces are arranged in a two-dimensional array configuration may be used. In the case of such a detection unit, the detection surface is divided for each predetermined region. Then, backscattered electron signals detected by the plurality of detection surfaces arranged in the regions may be subjected to averaging processing for each region. Thus, various other configurations can be used as the configuration of the detection unit.

Although in the above-described embodiments an example in which a metal powder of titanium, aluminum, iron, or the like, for example, is used as a powder material is described, the present invention is not limited thereto, and a resin or the like may be used as a powder material. Further, although an example in which an electron gun that applies an electron beam is used as a heating mechanism that preheats or melts a powder material has been described, the present invention is not limited thereto. As the heating mechanism, for example, a laser irradiation unit that applies laser light may be used.

Further, although an example in which the PC 104 is used as the control unit has been described, the present invention is not limited thereto. As the control unit, a control unit having various other arithmetic functions, such as an electron beam control unit that controls the beam irradiation device 2, can be used.

Further, although in the above-described embodiments an example in which the detection unit 46 is placed inside the radiation shielding cover 28 is described, the present invention is not limited thereto. The detection unit 46 may be placed outside the radiation shielding cover 28.

Some or all of the above components, functions, processing units, etc. may be obtained by hardware, for example, by designing an integrated circuit or the like. Further, the above components, functions, etc. may be obtained by software by a processor interpreting and executing a program that implements each function. Information such as a program, a table, and a file that implement each function can be put in a recording device such as a memory, a hard disk, or an SSD (solid-state drive), or a recording medium such as an IC card, an SD card, or a DVD.

Although in the present specification words such as "parallel" and "orthogonal" are used, each of these does not mean only strict "parallel" or "orthogonal", and may be a state of "substantially parallel" or "substantially orthogonal" including "parallel" or "orthogonal" and falling within a range in which the function can be exhibited.

### Description of Reference Numerals

- 1: three-dimensional PBF-AM apparatus
- 2: beam irradiation device
- 3: vacuum chamber
- 15: electron beam
- 16: powder supply device
- 16a: hopper
- 16b: powder dropper
- 16c: recoater
- 16d: blade
- 18: build table
- 20: build box
- 21: collection box
- 22: build plate
- 24: inner base
- 26: plate movement device
- 32: powder material
- 32a: build surface
- 38: build object
- 42: camera
- 44: shutter
- 46: detection unit
- 101: polarization amplifier control circuit
- 102: digital conversion circuit (ADC)
- 103: preamplifier (Pre-AMP)
- 104: personal computer (PC, control unit)
- 105: display unit
- 106: display screen

## Claims

1. A three-dimensional powder bed fusion additive manufacturing (PBF-AM) apparatus (1) comprising:
a build plate (22);
a powder supply device (16) configured to supply a powder material (32) to the build plate (22) to form a powder layer;
a beam irradiation device (2) configured to irradiate the powder layer with an electron beam (15);
a plurality of detection units (46) configured to detect backscattered electrons generated when the electron beam (15) is applied to the powder material (32); and
a control unit (104) configured to acquire a plurality of backscattered electron signals detected by a plurality of detection units (46), perform arithmetic processing on a plurality of backscattered electron signals, and calculate an arithmetic signal,
wherein the control unit (104) has a plurality of arithmetic expressions, and
the control unit (104) selects, according to a build step, a predetermined arithmetic expression from the plurality of arithmetic expressions, uses the selected arithmetic expression to perform arithmetic processing on a plurality of backscattered electron signals, and calculates an arithmetic signal.

2. The three-dimensional PBF-AM apparatus (1) according to claim 1, wherein
when determining condition of spreading of the powder material (32), the control unit (104) performs determination on the basis of an arithmetic signal obtained by addition of a plurality of backscattered electron signals.

3. The three-dimensional PBF-AM apparatus (1) according to any preceding claim, wherein
when determining a degree of melting of the powder material (32), the control unit (104) performs determination on the basis of an arithmetic signal obtained by subtraction of a plurality of backscattered electron signals.

4. The three-dimensional PBF-AM apparatus (1) according to claim 3, wherein
when determining the degree of melting of the powder material (32), the control unit (104) performs determination on the basis of an arithmetic signal obtained by a process in which a subtraction signal obtained by subtraction of a plurality of backscattered electron signals is divided by an addition signal obtained by addition of a plurality of backscattered electron signals.

5. The three-dimensional PBF-AM apparatus (1) according to any preceding claim, wherein
according to a build step, one or more arithmetic expressions are selected from the plurality of arithmetic expressions, and a plurality of arithmetic signals are calculated using the selected arithmetic expressions.

6. The three-dimensional PBF-AM apparatus (1) according to any preceding claim, wherein
the plurality of detection units (46) are arranged to surround a periphery of the build plate (22).

7. A method for controlling a three-dimensional PBF-AM apparatus (1),
the three-dimensional PBF-AM apparatus (1) including:
a build plate (22); a powder supply device (16) configured to supply a powder material (32) to the build plate (22) to form a powder layer; a beam irradiation device (2) configured to irradiate the powder layer with an electron beam (15); a plurality of detection units (46) configured to detect backscattered electrons generated when the electron beam (15) is applied to the powder material (32);
and a control unit (104) configured to acquire a plurality of backscattered electron signals detected by a plurality of detection units (46), perform arithmetic processing on a plurality of backscattered electron signals, and calculate an arithmetic signal,
the method comprising:
the control unit (104) selecting, according to a build step, a predetermined arithmetic expression from a plurality of arithmetic expressions, using the selected arithmetic expression to perform arithmetic processing on a plurality of backscattered electron signals, and calculating an arithmetic signal.
